# EUROPÄISCHE PATENTSCHRIFT

(11) **EP 1 044 179 B1**
(45) Veröffentlichungstag und Bekanntmachung des Hinweises auf die Patenterteilung: **12.02.2003**
(21) Anmeldenummer: 98966248.1
(22) Anmeldetag: 30.11.1998
(51) Int. Cl.: C04B 38/06

(54) **KERAMIKNETZWERK, VERFAHREN ZU DESSEN HERSTELLUNG UND VERWENDUNG**
CERAMIC NETWORK, METHOD FOR THE PRODUCTION AND UTILIZATION THEREOF
RESEAU CERAMIQUE, SON PROCEDE DE PRODUCTION ET SON UTILISATION

(30) Priorität: 01.12.1997 DE 19753249
(43) Veröffentlichungstag der Anmeldung: 18.10.2000
(73) Patentinhaber: FRAUNHOFER-GESELLSCHAFT ZUR FÖRDERUNG DER ANGEWANDTEN FORSCHUNG E.V., 80636 München (DE)
(72) Erfinder: ADLER, Jörg, D-01622 Mei en (DE); HEYMER, Heike, D-01217 Dresden (DE); STANDKE, Gisela, D-01099 Dresden (DE)
(74) Vertreter: Rauschenbach, Marion, Dipl.-Ing.
(86) Internationale Anmeldenummer: EP9807711
(87) Internationale Veröffentlichungsnummer: WO99028272

(56) Entgegenhaltungen:
- EP-A- 0 443 228
- EP-A- 0 490 062
- DE-A- 3 540 449
- US-A- 4 912 076
- US-A- 5 066 432

## Beschreibung

### Technisches Gebiet

Die Erfindung bezieht sich auf das Gebiet der Keramik und betrifft ein Keramiknetzwerk, wie es z.B. als Tiefenfilter, insbesondere als Metallschmelzenfilter, als Stützkörper für die Filtration, Wärmetauscher, Regenerator, elektrisch beheizbarer Thermostat, Katalysatorträger, Brennerelement für Flächenstrahlungsbrenner und Volumenbrenner, Reaktionskammerfüllelement, Schallabsorber oder Versteifungsmaterial für Paneele oder als keramisches Verstärkungsmaterial für metallische Composite (MMC's) zur Anwendung kommen kann und ein Verfahren zu dessen Herstellung und Verwendung.

### Stand der Technik

Keramiknetzwerke in Form von offenzelligen Schaumkeramiken sind bekannt.
Bekannt sind Verfahren zur Herstellung derartiger offenzelliger Schaumkeramiken nach dem sogenannten "Schwartzwalder-Verfahren", welches industriell genutzt und am weitesten verbreitet ist. Entsprechend diesem Verfahren wird aus einem offenzelligen Polymerschaum das gewünschte Bauteil herausgeschnitten und anschließend mit einer Suspension aus keramischen Partikeln und Wasser oder Lösungsmittel getränkt. Danach wird der getränkte Polymerschaum ein- oder mehrmals mechanisch ausgepreßt und danach getrocknet. Nun erfolgt das Ausbrennen des Polymerschaumes und danach die Sinterung der zurückgebliebenen keramischen Beschichtung (US 3,090,094).
Nach diesem Verfahren hergestellte offenzellige Schaumkeramik ist eine Abformung der zellenartigen Polymerstruktur des Ausgangsmaterials. Durch das Ausbrennen des Polymerschaumes sind die verbliebenen keramischen Stege hohl. Der Querschnitt dieser Stege ist dreikantig und die Form der Hohlräume ist im Querschnitt ebenfalls dreikantig. An den Kanten der Hohlräume ist die keramische Beschichtung häufig gerissen. Die Hohlräume und die Risse führen zu einer sehr geringen mechanischen Festigkeit. Da durch die Schwindung der keramischen Beschichtung beim Sintern die Rißanfälligkeit noch erhöht wird, verwendet man relativ schwindungsarme Massen, die aber nach dem Sintern eine hohe innere Porosität aufweisen. Dies führt ebenfalls zu einer geringen mechanischen Festigkeit (J. Am. Ceram. Soc. 77(6), 1467-72 (1994)).

Die aus Polymerschäumen nach dem o.g. Verfahren hergestellten Keramikschäume besitzen deshalb im Inneren der keramischen Stege Hohlräume mit einem konkaven dreikantigen Querschnitt (Cahn, R.W., Haasen, P., Kramer, E.J. (Hrsg.): Material Science and Technology, Vol. 11, VCH 1994, S. 474). Die Form dieses Hohlraumes ist für die mechanische Festigkeit der Stege des Keramikschaumes sehr ungünstig, da der Traganteil der Spitzen der Dreiecke nur sehr gering ist. Durch die Anfälligkeit der spröden Keramik gegenüber Rißeinleitung ist auch die sehr spitz zulaufende Form der dreikantigen Hohlräume problematisch, da sich von dort ausgehend nahezu immer Risse bilden, welche die Festigkeit der keramischen Stege weiter erniedrigen (J. Am. Ceram. Soc. 77 (6) 1467-72 (1994)). Daher besitzen die nach dem Schwartzwalder-Verfahren hergestellten Schäume eine niedrige mechanische Festigkeit, was für die o.g. Anwendungsfälle, sowie das Handling und den Transport solcher Keramikschäume nachteilig ist.

Die zur Abformung verwendeten Schaumstoffe werden durch Aufschäumung eines Gemisches verschiedener chemischer Komponenten hergestellt. Während der Reaktion der flüssigen Komponenten miteinander entsteht ein Gas, wodurch sich Gasblasen in der Flüssigkeit bilden und wachsen. Weiterhin polymerisieren die Ausgangskomponenten, wodurch sich die Viskosität der Flüssigkeit erhöht. Am Ende der Reaktion bildet sich ein festes Polymer, das eine große Anzahl an Gasblasen enthält (Polymerschaum). Durch die Wahl der Ausgangskomponenten und die Reaktionsführung lassen sich die Größe der Blasen im Polymerschaum innerhalb bestimmter Grenzen steuern.
Durch eine Nachbehandlung, die sogenannte Retikulierung, werden die zwischen den Gasblasen liegenden Trennhäutchen chemisch oder thermisch vollständig entfernt, wodurch der für die Keramikherstellung benötigte offenzellige Polymerschaum entsteht. Dieser Schaum besteht nur noch aus Polymerstegen, die sich zwischen jeweils drei benachbarten Gasblasen ausgebildet haben ( Klemper D. und Frisch K.C. (Hrsg.): Handbook of Polymeric Foams and Foam Technology, Hanser 1991, S. 24).

Aus der Natur der Gasblasenschäumung resultiert, daß die Oberflächen des Polymerschaumes immer konkav geformt sind. Die Querschnitte der den Schaum bildenden Polymerstege haben deshalb die Form von Dreiecken mit konkaven Seitenflächen mit sehr spitzwinklig zulaufenden Spitzen (Klemper D. und Frisch K.C. (Hrsg.): Handbook of Polymeric Foams and Foam Technology, Hanser 1991, S. 28/29). Dies gilt als Naturgesetzmäßigkeit für alle geschäumten Materialien.

Die bei der Schäumung der Polymere auftretenden Gasblasen können auch nicht unbegrenzt in ihrer Größe erzeugt werden. Bei zu großen Gasblasen kollabiert der Schaum, bevor die Polymerisation zu einer Verfestigung des Schaumes geführt hat (Klemper D. und Frisch K.C. (Hrsg.): Handbook of Polymeric Foams and Foam Technology, Hanser 1991, S. 9). Die obere Grenze für den am breitesten genutzten Polymerschaum aus Polyurethan-Weichschaumstoff beträgt ungefähr 5 Pores Per Inch (maximal rund 5 mm Zellweite). Damit ist auch aus dieser Richtung eine Begrenzung der Möglichkeiten des Einsatzes von Polymerschaum für die Schaumkeramikherstellung gegeben.

Es ist weiterhin bekannt, daß es sich bei dem verwendeten Schaumstoff zumeist um Polyurethanschaumstoff handelt (Am. Ceram. Soc. Bull. 71 (11) 1992). Nachteilig bei der Verwendung von Polyurethan als Ausgangsstruktur für die Schaumkeramikherstellung ist dagegen, daß bei der notwendigen thermischen Zersetzung des Polyurethans giftige oder gesundheitsgefährdende Gase , z.B. isocyanate oder Cyanwasserstoff, frei werden können (J. Polym. Sci. C, 23(1968), 117-125).

Um die Probleme der mechanischen Festigkeit etwas abzubauen, wurden nach der DE 35 40 449 oder DE 35 39 522 vorgeschlagen, eine mehrfache Beschichtung des verwendeten Polyurethanschaumes vorzunehmen. Dadurch wird die Dicke der Keramikstege erhöht und somit auch die mechanische Festigkeit des gesinterten Keramikschaumes.
Problematisch ist der erhöhte Verfahrensaufwand für die Mehrfachbeschichtung. Außerdem besitzt die Keramikbeschichtung vor der Sinterung nur eine geringe Festigkeit und die zur Abtrennung der überschüssigen Suspension notwendige mechanische Belastung des beschichteten Polymerschaumes während der Mehrfachbeschichtung führt deshalb häufig zu neuen Defekten in der Beschichtung. Prinzipiell beseitigt aber die Mehrfachbeschichtung auch nicht den genannten Nachteil der ungünstig geformten konkav-dreikantigen Hohlräume der Stege.

Ebenfalls bekannt ist es, für die Herstellung von porösen Keramiken Keramikfasern als Mono- oder Multifilamente zu verwenden, die gelegt, gestrickt, genäht oder verklebt sein können (IChemE Symposium Series No99 (1986) 421-443; MTZ Motortechnische Zeitschrift 56 (1995) 2,88-94).
Nachteilig dabei ist, daß derartige Keramikfasern schwierig und aufwendig herzustellen und daher sehr teuer sind und schwierig zu verarbeiten, da sie sehr spröde sind. Beispielsweise sind Wirktechniken dabei nur begrenzt einsetzbar. Es ist somit nur eine begrenzte Auswahl an Keramikmaterialien für solche Fasern einsetzbar, wodurch die Modifizierung der Eigenschaften der daraus hergestellten porösen Keramik schwer fällt oder nahezu unmöglich macht. Solche porösen Strukturen sind außerdem flexibel, da die Fasern an den Kontaktstellen untereinander nicht miteinander fixiert sind. Das ist nachteilig z.B. bei Filtrationen oder mechanischen Belastungen, da diese Keramiken dann insgesamt nicht sehr steif sind und außerdem besonders bei Multifilamenten Faserabrieb erzeugt wird.
Die Fixierung derartiger Fasern kann auch vorgenommen werden (US 5,075,160), dabei ist aber für die typischen Anwendungsfälle nur interessant, wenn eine keramische Fixierung erzeugt wird. Auch das ist schwierig und aufwendig zu bewerkstelligen, zumeist über CVD- oder CVI-Techniken, aber die Materialauswahl ist wieder sehr eingeschränkt.

Weiterhin ist bekannt, daß offenporige Materialien aus Polymer-, Natur- oder Kohlenstoffasern gefertigt werden und diese dann direkt in ein keramisches Material überführt werden, z.B. durch Pyrolyse oder unter Zuführung anderer chemischer Elemente über die flüssige oder Gasphase und Reaktion der Fasern mit diesen Elementen. Die Umwandlung dieser Ausgangsfasern zu den offenporigen Keramiken ist aber auch kompliziert und nur durch aufwendige Verfahren steuerbar; dadurch wird die Auswahl an Materialien und Geometrien sehr eingeschränkt.

### Darstellung der Erfindung

Die Aufgabe der Erfindung besteht darin, ein Keramiknetzwerk und ein Verfahren zu dessen Herstellung anzugeben, bei dem die mechanische Festigkeit verbessert ist und/oder eine anwendungsabhängige Struktur des Keramiknetzwerkes gezielt eingestellt werden kann.

Die Aufgabe wird durch die in den Ansprüchen angegebene Erfindung gelöst. Weiterbildungen sind Gegenstand der Unteransprüche.

Durch die erfindungsgemäße Lösung wird ein zwei- oder dreidimensionales Keramiknetzwerk erhalten, dessen keramische Stege Hohlräume mit einer Querschnittsfläche mit einem kreisförmigen oder nahezu kreisförmigen oder weitgehend kreisförmigen oder einem konvexen oder mehrfach konvexen Umriß aufweisen. Dadurch wird eine gleichmäßige Beschichtungsstärke, d.h. ein gleichmäßiger Traganteil, erreicht. Außerdem kann eine Rißeinleitung weitgehend vermieden werden, wodurch die erfindungsgemäßen und erfindungsgemäß hergestellten Keramiken höhere mechanische Festigkeit zeigen.

Für einige Anwendungen von offenporigen Keramiknetzwerken, z.B. für die Anwendung als Filtermaterial, Regenerator oder Schalldämpfer ist es wichtig, daß der Aufbau der abgeformten Schäume in jeder Raumrichtung nahezu gleich ist. Dies ist mit den nach dem Stand der Technik bekannten offenporigen Schaumkeramiken realisierbar, kann aber ebenfalls mit dem erfindungsgemäßen Keramiknetzwerk realisiert werden.
Für einige Anwendungsfälle ist es aber von großem Vorteil, wenn das Keramiknetzwerk in ein oder zwei oder in allen drei Raumrichtungen gezielt strukturiert aufgebaut werden kann. Die Strukturierung kann dabei vorteilhafterweise gleichmäßig und/oder wiederholt sein. Dies bedeutet, daß aus einer gleichmäßigen, beliebig oft wiederholten, richtungsabhängigen Struktur des Fasernetzwerkes, beispielsweise ein Baumwollgewebe mit einem eingewebten Muster, ein Keramiknetzwerk mit genau der gleichen Struktur herstellbar ist.
Es kann vorteilhaft sein bei Gas- oder Flüssigkeitsdurchströmung eine Vorzugsrichtung zu erzeugen oder um im Falle der Nutzung als Versteifung für Metalle eine Vorzugsrichtung der mechanischen Festigkeit zu erreichen. Eine derartige Strukturierung des Keramiknetzwerkes ist nach dem Stand der Technik nicht bekannt und nicht erreichbar, kann jedoch ohne weiteres mit dem erfindungsgemäßen Verfahren hergestellt werden.
Beispielsweise kann ein Gewirk oder Gestrick so hergestellt werden, daß der Durchfluß in einer Raumrichtung nahezu nicht behindert wird. Aus diesem Gewirk oder Gestrick kann dann problemlos mit dem erfindungsgemäßen Verfahren ein Keramiknetzwerk hergestellt werden.

Ein weiterer Vorteil der erfindungsgemäßen Lösung besteht darin, daß mit dem erfindungsgemäßen Keramiknetzwerk größere Zellweiten hergestellt werden können.
Mit dem Verfahren nach dem Stand der Technik sind für die als Grundlage der offenzelligen Schaumkeramiken verwendeten Polymerschäume nur bis zu einem bestimmten Grade aufschäumbar. Wenn dieser Punkt überschritten wird, wird die offenzellige Struktur der Schäume mehr und mehr zerstört und der Schaum fällt schließlich in sich zusammen. Die maximal erreichbare Zellweite liegt bei rund 5 mm.
Nach dem erfindungsgemäßen Verfahren sind Keramiknetzwerke mit weit größeren Zellweiten ohne weiteres herstellbar.

Weiterhin ist es vorteilhaft, wenn die Ausgangsstruktur aus Polymer- und/oder Naturfasern oder -faserbündeln hergestellt wird, da bei der Entfernung oder dem Ausbrand der Fasern oder der Faserbündel ungefährliche Zerfallsprodukte entstehen, die nicht giftig oder gesundheitsschädigend sind.

Beirn Ausbrennen des Fasernetzwerkes kann die Erhöhung der Temperatur so gewählt werden, daß sie linear oder nichtlinear oder stufenweise erfolgt. Dabei können allen möglichen Atmosphären vorhanden sein. Das Ausbrennen erfolgt solange, bis das Fasernetzwerk vollständig oder nahezu vollständig rückstandsfrei ausgebrannt ist.
Wenn dazu eine stufenweise Temperaturerhöhung gewählt wird, erfolgt der Ausbrand vorteilhafterweise in der ersten oder in einer der ersten Temperaturstufen.

Durch das erfindungsgemäße Verfahren entsteht ein erfindungsgemäßes Keramiknetzwerk, bei dem eine stoffschlüssige Verbindung der einzelnen Keramikstege untereinander besteht. Stoffschlüssig heißt hier, daß die Stege und die Verbindung zwischen den Stegen aus dem gleichen Material bestehen.
Weiterhin besteht bei dem erfindungsgemäßen Keramiknetzwerk eine Verbindung der Hohlräume in den Stegen untereinander und insbesondere auch an den Kontaktstellen der Stege miteinander sind miteinander verbundene Hohlräume vorhanden. Dies entsteht durch das erfindungsgemäße Herstellungsverfahren, bei dem beispielsweise eine Kontaktstelle zwischen zwei Fasern insgesamt mit der Keramiksuspension umhüllt wird und nach dem Ausbrennen beider Fasern die Keramikstege durchgängig und auch an den Kontaktstellen durchgängig einen Hohlraum ausweisen.

Bei dem erfindungsgemäßen Verfahren werden vorteilhafterweise mit keramischen Material unbeschichtete oder ganz unbeschichtete Fasern eingesetzt.
Dabei ist aber möglich, daß beispielsweise ein Faserbündel von einer umfassenden Hülle umgeben ist.

Es ist auch von Vorteil, daß ein Netzwerk hinsichtlich seiner Form und/oder Struktur ganz oder im wesentlichen ganz oder teilweise gleich derart aufgebaut ist, daß es der Form und/oder der Struktur des herzustellenden Bauteils entspricht.
Dazu wird ein Fasemetzwerk hergestellt, welches ganz oder im wesentlichen ganz oder teilweise die Form und/oder Struktur des gewünschten herzustellenden Bauteils aufweist. Dieses Fasernetzwerk wird dann erfindungsgemäß behandelt und das gewünschte Keramiknetzwerk entsteht.

Während der Herstellung des Keramiknetzwerkes kann es zu einer Verkleinerung gegenüber dem Fasernetzwerk infolge Schwindung kommen, obwohl Form und/oder Struktur nach wie vor dem des gewünschten Bauteiles entsprechen können.

### Bester Weg zur Ausführung der Erfindung

Im weiteren wird die Erfindung an mehreren Ausführungsbeispielen näher erläutert.

### Beispiel 1

Als Ausgangsnetzwerk wird eine handelsübliche 40 x 40 x 20 mm3 Trägermatte aus verklebten, extrudierten Polyamidmonofilamenten mit rundem Querschnitt der einzelnen Fasern von ca. 350 µm verwendet. Dieses Netzwerk wird mit einer keramischen Suspension auf Wasserbasis mit einem Feststoffgehalt von 60 % getränkt. Der keramische Feststoff besteht zu 80 % aus einem SiC-Pulver mit einer bimodalen Korngrößenverteilung mit zwei Korngrößenmaxima von 6 und 20 µm und zu 20 % aus Ton. Die überschüssige Suspension wird in einer Zentrifuge bis zu einer Masse von 35 g abgetrennt. Danach wird die beschichtete Matte getrocknet und die Polyamid-Filamente ausgebrannt. Anschließend erfolgt die Sinterung bei 1200 °C in einem Kammerofen unter Luft. Das gesinterte Keramiknetzwerk besitzt die gleiche dreidimensionale Netzwerkstruktur wie die Trägermatte aus Polyamid. Die Stege des Keramiknetzwerkes aus SiC-Keramik sind hohl. Die Hohlräume weisen einen runden Querschnitt mit einem Durchmesser von ca. 350 µm auf.
Es wurde die Einzelfestigkeit der Stege bestimmt (J. Am. Ceram. Soc. 72(6) 885-889) und mit einer Schaumkeramik verglichen, die aus dem gleichen keramischen Material hergestellt wurde, wobei bei dieser als Ausgangsnetzwerk ein Polyurethanschaumstoff mit einer Zellweite von 10 ppi benutzt wurde. Die Festigkeit der Einzelstege dieser bekannten Schaumkeramik beträgt im Mittel von 20 Messungen 90 MPa. Bei dem erfindungsgemäßen Keramiknetzwerk sind Festigkeiten der Einzelstege von 160 MPa bestimmt worden.

### Beispiel 2

Als Ausgangsnetzwerk wird eine handelsübliche dreidimensionale Struktur mit den Abmessungen 60 x 60 x 10 mm³ verwendet, die aus Polyester-Monofilamenten dtex277 durch Wirktechnik als Abstandsgewirk hergestellt worden ist. Dieses Abstandsgewirk besteht aus zwei dicht gewirkten Flächen, die durch nahezu parallel angeordnete Abstandsfilamente mit Abständen von ca. 10 mm verbunden sind. Die parallel angeordneten Filamente haben einen Abstand untereinander von ca. 1mm. Dieses Abstandsgewirk wird mit einer keramischen Suspension auf Wasserbasis mit einem Feststoffgehalt von 60 % getränkt. Der keramische Feststoff besteht aus einem SiC-Pulver mit einer mittleren Korngröße von 1 µm. Die überschüssige Suspension wird in einer Zentrifuge bis zu einer Masse von 20 g abgetrennt. Danach wird das beschichtete Abstandsgewirk getrocknet und die Polyester-Filamente bei 600 °C unter Argonatmosphäre ausgebrannt. Anschließend erfolgt die Sinterung bei 2300 °C unter Argonatmosphäre. Das gesinterte Keramiknetzwerk besitzt die gleiche richtungsabhängige dreidimensionale Netzwerkstruktur wie das Polyester-Abstandsgewirk. Die Stege des Keramiknetzwerkes aus SiC-Keramik sind hohl. Die Hohlräume weisen einen runden Querschnitt mit einem Durchmesser von ca. 150 µm auf.
Die Druckfestigkeit des Keramiknetzwerkes ist richtungsabhängig unterschiedlich. Senkrecht zur Richtung der parallel angeordneten Abstandsstege ist eine mehr als doppelt so große Festigkeit gemessen worden, als parallel dazu.

### Beispiel 3

Als Ausgangsnetzwerk wird ein handelsüblicher 125 x 40 x 20 mm3.großer Filz aus Flachsfasern mit einem abgerundetem Querschnitt der einzelnen Fasern verwendet. Die Flachsfasern sind durch einen Latexklebstoff untereinander fixiert. Dieses Netzwerk wird mit einer keramischen Suspension auf Wasserbasis mit einem Feststoffgehalt von 78 Ma.-% getränkt. Der keramische Feststoff besteht aus einer handelsüblichen Al₂O₃-Sintermischung mit einer mittleren Korngröße von 5 µm. Die überschüssige Suspension wird in einer Zentrifuge bis zu einer Masse von 60 g abgetrennt. Danach wird der beschichtete Filz getrocknet und die Flachsfasern unter Luft ausgebrannt. Anschließend erfolgt die Sinterung bei 1650 °C in einem Kammerofen unter Luft. Das gesinterte Keramiknetzwerk besitzt die gleiche dreidimensionale Netzwerkstruktur wie der Filz aus Flachs mit einer Maßstabsverkleinerung von 20 %, was durch die Schwindung der Keramik beim Sintern hervorgerufen worden ist. Die Stege des Keramiknetzwerkes aus Al₂O₃-Keramik sind hohl. Die Hohlräume weisen einen abgerundeten Querschnitt auf.

### Beispiel 4

Als Ausgangsnetzwerk wird eine handelsübliche Struktur verwendet, die aus Polyester-Monofilamenten durch Wirktechnik als Abstandsgewirk hergestellt worden ist. Die Polyester-Monofilamente haben eine runden Querschnitt.
Dieses Abstandsgewirk besteht in Richtung x-y aus gleichmäßigen Quadraten mit Seitenlängen von 8 mm. Die x-y-Fläche erstreckt sich über eine Fläche von 100x100 mm. Von dieser Fläche gehen von den Eckpunkten der Quadrate Filamente schräg in z-Richtung ab, dergestalt, daß sich in x-z-Richtung dreieckige Kanäle ergeben, während in y-z-Richtung viereckige Kanäle mit 2 gebogenen Seitenflächen im Abstand von 8 mm ergeben. In z-Richtung ergibt sich eine Wiederholung der x-y-Fläche im Abstand von 8 mm.
5 Matten 100x100x8 mm aus diesem Abstandsgewirk werden durch Verkleben mit handelsüblichen thermofixierbaren Klebefolien übereinander befestigt, dergestalt, daß die Eckpunkte der Quadrate übereinander liegen. Durch Heißdrahtschneiden werden aus dieser fünflagigen Matte Zuschnitte von 40x40x24 mm hergestellt, und zwar dergestalt, daß die Fläche 40x40 mm in jeweils 3 unterschiedlichen Raumrichtungen x, y, z liegt.
Diese Zuschnitte werden mit einer keramischen Suspension auf Wasserbasis mit einem Feststoffgehalt von 60% getränkt. Der keramische Feststoff besteht aus einem SiC-Pulver mit einer bimodalen Komgrößenverteilung mit zwei Korngrößenmaxima von 6 und 20 µm. Die Suspension enthält außerdem 6% eines wasserlöslichen Harzes. Die überschüssige Suspension wird in einer Zentrifuge abgetrennt, bis die getränkten Zuschnitte eine Masse von 49 g aufweisen. Danach werden die beschichteten Zuschnitte getrocknet und einer zweistufigen Temperaturbehandlung unter Schutzgas (Argon) bzw. Vakuum unterworfen. In der ersten Stufe erfolgt bei 600 °C unter Argon die Entfernung der Polymerfilamente, danach werden die Zuschnitte bei einer Temperatur von 1650 °C unter Vakuum in Kontakt mit einer flüssigen Siliciumschmelze gebracht, wodurch die bekannte Reaktionsbindung der SiC-Partikel abläuft.
Nach der Abkühlung liegen Formteile 40x40x25 mm mit einem 5 lagigen Keramiknetzwerk vor, mit Keramikstegen, die aus reaktionsgebundenem Siliciumcarbid bestehen und die stoffschlüssig miteinander verbunden sind. Die Querschnittsflächen der Hohlräume in den Keramikstegen ist nahezu kreisförmig. Die Netzstruktur ist in Form und Abmessung der des oben beschriebenen Abstandsgewirkes identisch.
An den keramischen Formteilen wurden Druckverlustmessungen mit Luft durchgeführt. Die Durchströmungsrichtung war senkrecht zur Fläche 40x40 mm. Bei einem Durchströmungsvolumen von 20 I/s werden an den 3 in unterschiedlichen Richtungen orientierten Proben Druckverluste von 500 Pa, 750 Pa und 1500 Pa gemessen. Weiterhin wurden Festigkeitsprüfungen durch Eindruck eines zylindrischen Metallstempels mit Durchmesser von 25 mm durchgeführt, wobei dieser Eindruck in die Flächen 40x40 eingebracht wurde und die Kraft gemessen wurde, bei der erste Stege der Proben zerbrechen. An den 3 in unterschiedlichen Richtungen orientierten Proben wurden Bruchlasten von 80 N, 400 N und 450 N gemessen.

### Beispiel 5

Als Ausgangsnetzwerk wird eine handelsübliche Matte verwendet, die aus Polyamid-Monofilamenten durch Wirktechnik als Abstandsgewirk hergestellt worden ist. Die Polyamid-Monofilamente haben einen runden Querschnitt. Dieses Abstandsgewirk besteht in Richtung x-y aus Parallelogrammen mit Seitenlängen von 2 mm. Die x-y-Fläche erstreckt sich über eine Fläche von 100x100 mm. Von dieser Fläche gehen von den Eckpunkten der Quadrate Filamente senkrecht in z-Richtung ab, dergestalt, daß sich in x-z-Richtung rechteckige Kanäle ergeben, während in y-z-Richtung viereckige Kanäle mit 2 gebogenen Seitenflächen im Abstand von 8 mm ergeben. In z-Richtung ergibt sich eine Wiederholung der x-y-Fläche im Abstand von 4 mm.
Durch Heißdrahtschneiden werden aus dieser Matte Zuschnitte von 40x40x24 mm hergestellt. Diese Zuschnitte werden mit einer keramischen Suspension auf Wasserbasis mit einem Feststoffgehalt von 60% getränkt. Der keramische Feststoff besteht zu 85 % aus einem SiC-Pulver mit Korngröße von 5 µm und zu 15% aus Ton. Die Suspension enthält außerdem 6% eines wasserlöslichen Harzes. Die überschüssige Suspension wird in einer Zentrifuge abgetrennt, bis die getränkten Zuschnitte eine Masse von 35 g aufweisen. Danach werden die beschichteten Zuschnitte getrocknet und durch Aushärten des Harzes bei 160°C, 2h verfestigt. Danach wird das Polymer durch 24h-Auslagerung der Proben in 10%iger Salzsäure entfernt. Die Proben werden vorsichtig gewaschen, getrocknet und anschließend bei einer Temperatur von 1150 °C unter Luft gesintert.
Nach der Abkühlung liegen Formteile 40x40x25 mm mit einem Keramiknetzwerk vor, mit Stegen, die aus tongebundenem Siliciumcarbid bestehen und die stoffschlüssig miteinander verbunden sind. Die Querschnittsflächen der Hohlräume in den Keramikstegen weisen einen nahezu kreisförmigen Querschnitt auf. Die Netzstruktur ist in Form und Abmessung der des oben beschriebenen Abstandsgewirkes identisch.

## Patentansprüche

1. Keramiknetzwerk aus zwei- oder dreidimensional miteinander verbundenen Keramikstegen, bei dem die Keramikstege untereinander eine stoffschlüssige Verbindung aufweisen und die Keramikstege auch über ihre Kontaktstellen einen miteinander verbundenen Hohlraum aufweisen, und bei dem die Hohlräume in den Keramikstegen eine Querschnittsfläche mit einem kreisförmigen oder nahezu kreisförmigen oder weitgehend kreisförmigen oder einen konvexen oder mehrfach konvexen Umriß aufweisen.

2. Keramiknetzwerk nach Anspruch 1, bei dem die zwei- oder dreidimensionale Struktur des Netzwerkes richtungsabhängig unterschiedlich gestaltet ist.

3. Keramiknetzwerk nach Anspruch 1, bei dem die zwei- oder dreidimensionale Struktur des Netzwerkes gleichmäßig und/oder wiederholt ist.

4. Keramiknetzwerk nach Anspruch 1, bei dem die zwei- oder dreidimensionale Struktur des Netzwerkes richtungsabhängig und gleichmäßig und/oder wiederholt ist.

5. Keramiknetzwerk nach Anspruch 1, bei dem die Form und/oder die Struktur des Netzwerkes der Form und/oder der Struktur des herzustellenden Bauteiles ganz oder im wesentlichen ganz oder teilweise entspricht.

6. Verfahren zur Herstellung eines Keramiknetzwerkes nach einem der Ansprüche 1 bis 5, bei dem aus Polymerfasern und/oder Naturfasern und/oder anderen Fasern, wobei die Fasern jeweils eine Querschnittsfläche mit einem kreisförmigen oder nahezu kreisförmigen oder weitgehend kreisförmigen oder einen konvexen oder mehrfach konvexen Umriß aufweisen, ein Fasernetzwerk hergestellt wird, das mit einer Keramiksuspension ein- oder mehrmals getränkt wird, anschließend die überschüssige Suspension entfernt wird, das getränkte Fasernetzwerk getrocknet und danach das Fasernetzwerk ganz oder im wesentlichen ganz oder teilweise entfernt oder ausgebrannt wird und anschließend das verbliebene Netzwerk gesintert wird.

7. Verfahren nach Anspruch 6, bei dem Polymerfasem und/oder Naturfasern und/oder andere Fasern eingesetzt werden, die ein strukturiertes oder unstrukturiertes Fasernetzwerk aufweisen.

8. Verfahren nach Anspruch 6, bei dem Polymerfasern und/oder Naturfasern und/oder andere Fasern eingesetzt werden, die ein strukturierfes Fasernetzwerk mit einer gleichmäßigen und/oder wiederholte Struktur aufweisen.

9. Verfahren nach Anspruch 8, bei dem Polymerfasern und/oder Naturfasern und/oder andere Fasern eingesetzt werden, die ein strukturiertes Fasernetzwerk mit einer gleichmäßigen und/oder wiederholte Struktur aufweisen und bei dem diese Struktur richtungsabhängig ist.

10. Verfahren nach Anspruch 7, bei dem das strukturierte oder unstrukturierte Fasernetzwerk eine zwei- und/oder dreidimensionale Verbindung der Polymerund/oder Natur- und/oder anderen Fasern ist, die durch Verkleben, Verschweißen, Flechten, Filzen, Weben, Wirken, Stricken, Sticken, Nähen, Prägen aus einzelnen Fasern und/oder Faserbündeln hergestellt wird.

11. Verfahren nach Anspruch 6, bei dem Fasern aus Polyester, Polyethylen, Polyamid, Baumwolle, Zellulose, Cocos, Jute, Hanf, Flachs, Roßhaar eingesetzt werden.

12. Verfahren nach Anspruch 6, bei dem mit keramischem Material unbeschichtete Fasern eingesetzt werden.

13. Verfahren nach Anspruch 12, bei dem unbeschichtete Fasern eingesetzt werden.

14. Verfahren nach Anspruch 6, bei dem das Entfernen des Fasernetzwerkes durch Ätzen, Lösen oder bakteriologisch durchgeführt wird.

15. Verfahren nach Anspruch 6, bei dem das Ausbrennen des Fasernetzwerkes durch eine lineare oder nichtlineare oder durch eine stufenweise Erhöhung der Temperatur erfolgt.

16. Verfahren nach Anspruch 15, bei dem das Ausbrennen des Fasernetzwerkes unter Luft oder unter einer reduzierenden oder oxidierenden oder inerten Atmosphäre durchgeführt wird.

17. Verfahren nach Anspruch 6, bei dem das Ausbrennen des Fasernetzwerkes vollständig oder nahezu vollständig rückstandsfrei erfolgt.

18. Verfahren nach Anspruch 15, bei dem das Ausbrennen des Fasernetzwerkes durch eine stufenweise Temperaturerhöhung durchgeführt wird und dabei das vollständig oder nahezu vollständig rückstandsfreie Ausbrennen in der ersten oder in einer der ersten Temperaturstufen erfolgt.

19. Verfahren nach Anspruch 6, bei dem ein Fasernetzwerk hergestellt wird, welches ganz oder im wesentlichen ganz oder teilweise die Form und/oder die Struktur des herzustellenden Bauteils aufweist.

20. Verwendung eines Keramiknetzwerkes nach einem der Ansprüche 1 bis 5 im Kontakt mit Flüssigkeiten und/oder Gasen.

21. Verwendung nach Anspruch 20, wobei das Keramiknetzwerk von Flüssigkeiten und/oder Gasen durchströmt wird oder von ihnen oder von erstarrten Flüssigkeiten (Schmelzen) gefüllt ist

22. Verwendung nach Anspruch 20, als Filter, insbesondere als Metallschmelzenfilter, Tiefenfilter oder als Stützkörper für die Filtration, als Wärmetauscher oder Regenerator, als Katalysatorträger oder Reaktionskammerfüllelement, als Brennerelement für Flächenstrahlungsbrenner und Volumenbrenner, als Heizelement oder Regelelement für Thermostatierung.

23. Verwendung nach Anspruch 20, bei dem die Keramiknetzwerke einer mechanischen Belastung unterworfen sind.

24. Verwendung nach Anspruch 20, als Schalldämpfungselement, als Versteifungselement für Leichtbauelemente, als Spiegelsupport oder als thermische Schutzkacheln, als keramisches Verstärkungsmaterial für Metal-Matrix-Composites (MMC) oder Leichtmetall-Legierungs-MMC, als Bremsenwerkstoff, als Schleifkörper oder als Träger von Schleifmitteln.

## Claims

1. Ceramic network of ceramic struts joined two-dimensionally or three-dimensionally with one another, in which the ceramic struts have a material-consistent connection to one another and the ceramic struts also have an interconnected cavity in their points of contact, and in which the cavities in the ceramic struts have a cross-sectional area with a circular or nearly circular or largely circular or a convex or multiply convex outline.

2. Ceramic network according to claim 1, in which the two-dimensional or three-dimensional structure of the network is shaped differently depending on the direction.

3. Ceramic network according to claim 1, in which the two-dimensional or three-dimensional structure of the network is uniform and/or repeated.

4. Ceramic network according to claim 1, in which the two-dimensional or three-dimensional structure of the network is directionally dependent and uniform and/or repeated.

5. Ceramic network according to claim 1, in which the shape and/or the structure of the network corresponds entirely or essentially entirely or in part with the shape and/or the structure of the component to be manufactured.

6. Method for the production of a ceramic network according to one of claims 1 through 5, in which a fiber network is manufactured from polymer fibers and/or natural fibers and/or other fibers, in which the fibers each have a cross-sectional area having a circular or nearly circular or largely circular or a convex or multiply convex outline, which fiber network is impregnated one or more times with a ceramic suspension, then the excess suspension is removed, the impregnated fiber network is dried and subsequently the fiber network is entirely or essentially entirely or partially removed or burned out, and then the remaining network is sintered.

7. Method according to claim 6, in which polymer fibers and/or natural fibers and/or other fibers are used which have a structured or unstructured fiber network.

8. Method according to claim 6, in which polymer fibers and/or natural fibers and/or other fibers are used which have a structured fiber network with a uniform and/or repeated structure.

9. Method according to claim 8, in which polymer fibers and/or natural fibers and/or other fibers are used which have a structured fiber network with a uniform and/or repeated structure and in which this structure is directionally dependent.

10. Method according to claim 7, in which the structured or unstructured fiber network is a two-dimensional and/or three-dimensional connection of the polymer fibers and/or natural fibers and/or other fibers which is manufactured from individual fibers and/or fiber bundles by gluing, welding, plaiting, felting, weaving, knitting, embroidery, sewing, embossing.

11. Method according to claim 6, in which fibers of polyester, polyethylene, polyamide, cotton, cellulose, coco, jute, hemp, flax, horsehair are used.

12. Method according to claim 6, in which fibers that are uncoated with ceramic material are used.

13. Method according to claim 12, in which uncoated fibers are used.

14. Method according to claim 6, in which removal of the fiber network is accomplished by etching, dissolving or bacteriologically.

15. Method according to claim 6, in which burnout of the fiber network takes place by a temperature increase in linear or nonlinear fashion or in stages.

16. Method according to claim 15, in which burnout of the fiber network takes place in air or in a reducing or oxidizing or inert atmosphere.

17. Method according to claim 6, in which burnout of the fiber network is accomplished completely or nearly completely free of residue.

18. Method according to claim 15, in which burnout of the fiber network is accomplished by an increase in temperature in stages and during which the completely or nearly completely residue-free burnout occurs in the first or one of the first temperature stages.

19. Method according to claim 6, in which a fiber network is manufactured which completely or essentially completely or partially has the shape and/or structure of the component to be manufactured.

20. Utilization of a ceramic network according to one of claims 1 through 5 in contact with fluids and/or gases.

21. Utilization according to claim 20, wherein fluids and/or gases flow through the ceramic network or the ceramic network is filled by fluids and/or gases or by congealed fluids (molten material).

22. Utilization according to claim 20 as a filter, more particularly as a molten metal filter, deep-bed filter, or as support for filtration, as heat exchanger or regenerator, as catalyst support or reaction chamber fill element, as burner element for radiant heaters and space heaters, as heat element or control element for thermostats.

23. Utilization according to claim 20, in which the ceramic networks are subjected to a mechanical load.

24. Utilization according to claim 20, as a sound damping element, as stiffening element for lightweight building elements, as mirror support or as thermal protective tiles, as a ceramic reinforcement material for metal matrix composites (MMC) or light metal alloy MMC, as a brake material, as an abrasive or as a carrier for abrasives.

## Revendications

1. Réseau en céramique formé d'entretoises en céramique reliées les unes aux autres dans deux ou trois dimensions, selon lequel les entretoises en céramique présentent entre elles une liaison par la matière et les entretoises en céramique ont également au niveau de leur point de contact, une cavité reliée aux autres, et les cavités dans les entretoises en céramique ont une section circulaire ou pratiquement circulaire ou très largement circulaire et un contour convexe ou plusieurs fois convexe.

2. Réseau de matière céramique selon la revendication 1,
dans lequel la structure à deux ou trois dimensions du réseau est différente en fonction de la direction.

3. Réseau de matière céramique selon la revendication 1 dans lequel la structure à deux ou trois dimensions du réseaux se répète ou/et est régulière.

4. Réseau de matière céramique selon la revendication 1,
**caractérisé en ce que**
la structure à deux ou trois dimensions du réseau dépend de la direction et est régulière et/ou se répète.

5. Réseau de matière céramique selon la revendication 1,
**caractérisé en ce que**
la forme et/ou la structure du réseau correspondent à la forme et/ou à la structure de la pièce à réaliser, en totalité ou pratiquement complètement ou partiellement.

6. Procédé de fabrication d'un réseau en matière céramique selon l'une quelconque des revendications 1 à 5 selon lequel à partir de fibres de polymère et/ou de fibres naturelles et/ou d'autres fibres, les fibres ayant chaque fois une section circulaire ou pratiquement circulaire ou très largement circulaire et un contour convexe ou plusieurs fois convexe, réalise un réseau de fibres que l'on imprègne une ou plusieurs fois d'une suspension de matière céramique et ensuite on évacue la suspension excédentaire, on fait sécher le réseau de fibres, imprimé et ensuite on enlève ou on brûle le réseau de fibres, totalement ou pratiquement totalement ou partiellement et ensuite on fritte le réseau qui subsiste.

7. Procédé selon la revendication 6 dans lequel on utilise des fibres de polymère et/ou des fibres naturelles et/ou d'autres fibres qui ont un réseau de fibres structurées ou non structurées.

8. Procédé selon la revendication 6, dans lequel les fibres de polymère et/ou les fibres naturelles et/ou d'autres fibres sont utilisées, ces fibres ayant un réseau de fibres structurées avec une structure régulière et/ou répétée.

9. Procédé selon la revendication 8 dans lequel on utilise des fibres de polymère et/ou des fibres naturelles et/ou d'autres fibres qui ont un réseau de fibres structurées avec une structure régulière et/ou répétée et cette structure dépend de la direction.

10. Procédé selon la revendication 7 dans lequel le réseau de fibres structurées ou non structurées est une combinaison à deux et/ou trois dimensions de fibres de polymère et/ou de fibres naturelles et/ou d'autres fibres obtenues par collage, soudage, tressage, feutrage, tissage, tricotage, nouage, brodage, couture, matriçage de fibres séparées et/ou de faisceaux de fibres.

11. Procédé selon la revendication 6 dans lequel on utilise des fibres de polyester, polyéthylène, polyamide, coton, cellulose, coco, jute, chanvre, lin et crin de cheval.

12. Procédé selon la revendication 6 selon lequel on utilise des fibres non revêtues de matière céramique.

13. Procédé selon la revendication 12 dans lequel on utilise des fibres non revêtues.

14. Procédé selon la revendication 6 selon lequel on enlève le réseau de fibres par attaque chimique, dissolution, ou par un moyen bactériologique.

15. Procédé selon la revendication 8 dans lequel la combustion du réseau de fibres se fait par une augmentation linéaire ou non linéaire ou par paliers de la température.

16. Procédé selon la revendication 15,
**caractérisé en ce que**
la combustion du réseau de fibres se fait avec de l'air ou dans une atmosphère réductrice ou oxydante ou inerte.

17. Procédé selon la revendication 6 selon lequel la combustion du réseau de fibres se fait totalement sans résidus ou pratiquement totalement sans résidus.

18. Procédé selon la revendication 15 dans lequel la combustion du réseau de fibres se fait par une élévation de la température par paliers et la combustion complète sans résidus ou pratiquement complète sans résidus se fait au premier palier ou pendant l'un des premiers paliers de température.

19. Procédé selon la revendication 6 selon lequel on réalise un réseau de fibres qui présente totalement ou essentiellement totalement ou partiellement la forme et/ou la structure de la pièce à réaliser.

20. Application d'un réseau en céramique selon l'une quelconque des revendications 1 à 5 aux contacts de liquides et/ou de gaz.

21. Application selon la revendication 20 dans laquelle le réseau en céramique est traversé par des liquides et/ou des gaz et il est rempli par ceux-ci ou par des liquides qui figent (bain de fusion).

22. Application selon la revendication 20 comme filtre notamment comme filtre de bain métallique, de filtre de profondeur ou d'organe de support pour la filtration, comme échangeur de chaleur ou régénérateur, comme support de catalyseur ou élément de remplissage de chambre de réaction, comme élément combustible pour des brûleurs à rayonnement de surface et des brûleurs volumétriques, comme éléments chauffants ou éléments de régulation pour un thermostat.

23. Application selon la revendication 20 dans laquelle le réseau en céramique est soumis à une contrainte mécanique.

24. Application selon la revendication 20 comme élément d'isolation phonique, l'élément de rigidification pour des composants de construction légère, comme support de miroir ou comme carreaux de protection thermique, comme matière de renforcement en céramique pour des produits composites à matrice de métal (MMC) ou comme alliage de métal léger (MMC), comme combustible, comme organe abrasif ou comme support d'agent abrasif.
